# EUROPÄISCHE PATENTSCHRIFT

(11) **EP 0 948 259 B1**
(45) Veröffentlichungstag und Bekanntmachung des Hinweises auf die Patenterteilung: **27.03.2002**
(21) Anmeldenummer: 97948762.6
(22) Anmeldetag: 17.10.1997
(51) Int. Cl.: A01N 63/02, A01N 25/12, A01N 25/26

(54) **BACILLUS THURINGIENSIS ISRAELENSIS (BTI) ODER BACILLUS SPHAERICUS (BS)-ENDOTOXINHALTIGE EISGRANULATE**
ICE GRANULES CONTAINING ENDOTOXINS OF BACILLUS THURINGIENSIS ISRAELENSIS (BTI) OR BACILLUS SPHAERICUS (BS)
GRANULES DE GLACE CONTENANT DES ENDOTOXINES DE BACILLUS THURINGIENSIS ISRAELENSIS (BTI) OU DE BACILLUS SPHAERICUS (BS)

(30) Priorität: 28.12.1996 DE 19654652
(43) Veröffentlichungstag der Anmeldung: 13.10.1999
(73) Patentinhaber: Becker, Norbert, 67069 Ludwigshafen (DE); Mercatoris, Peter, 68309 Mannheim (DE)
(72) Erfinder: Becker, Norbert, 67069 Ludwigshafen (DE); Mercatoris, Peter, 68309 Mannheim (DE)
(74) Vertreter: Grussdorf, Jürgen, Dr.
(86) Internationale Anmeldenummer: EP9705747
(87) Internationale Veröffentlichungsnummer: WO9828984

(56) Entgegenhaltungen:
- DE-C- 4 133 889
- US-A- 4 166 112
- US-A- 4 276 381

## Beschreibung

Gegenstand der vorliegenden Erfindung sind neue, aus wäßrigen Suspensionen von Bacillus thuringiensis israelensis (BTI)- oder Bacillus sphaericus (BS)-Endotoxin hergestellte Eisgranulate, welche bei der Bekämpfung von Stechmückenlarven verwendet werden.

Stechmücken sind gefährliche Überträger von Krankheiten, z.B. Malaria, Blutungsfieber (Dengue, DHF), Enzephalitis oder lymphatischen Filariosen. Im europäischen Raum sind sie jedoch vor allen Dingen bei massenhaftem Auftreten eine erhebliche Plage, welche die Lebensqualität signifikant schmälert. Weltweit werden umfangreiche Maßnahmen zur Bekämpfung der Stechmücken getroffen, und dabei werden mehr als 50.000 Tonnen chemischer Insektizide jährlich eingesetzt. Neben dem objektiven Nutzen, in der Verringerung der Stechmückenhäufigkeit, bedingen diese Chemikalien jedoch erhebliche toxikologische Risiken, da sie nicht nur die Stechmücken bzw. ihre Larven schädigen, sondern auch gegen andere Organismen wirksam sind. Auch ökologische Risiken sind dabei durchaus gegeben, da die gleichzeitige Schädigung anderer Insekten, beispielsweise der nichtstechenden Zuckmücken, die Nahrungskette für Fische und Vögel stört. Man hat deshalb nach Alternativen gesucht, welche gezielter nur gegen Stechmücken bzw. ihre Larven wirken.

Neben den chemischen Insektiziden sind seit vielen Jahren bakterielle Insektizide Gegenstand intensiver Forschungsarbeiten.

1977 isolierten Goldberg und Margalit aus einer von Mückenbrutplätzen in der Negev-Wüste stammenden Probe einen Bacillus-thuringiensis-Stamm, der sich gegenüber Larven verschiedener Mücken, insbesondere Stech- und Kriebelmücken, als pathogen erwies. Dieser wird heute als Bacillus thuringiensis var. israelensis klassifiziert und auch als Pathotyp B bezeichnet zur Unterscheidung von einem Bacillus thuringiensis Pathotyp A, welcher gegen Lepidopteren wirksam ist. Im US P 4.166.112 wird die Verwendung von BTI als Insektizid beansprucht.

Mikrobiologische Präparate auf der Basis von Bacillus thuringiensis H-14 und Bacillus sphaericus haben sich in den zurückliegenden Jahren effektiv im Kampf gegen die Stechmücken erwiesen. Sie wirken sehr selektiv und töten nur die Larven weniger Mückenarten, insbesondere der Stechmücken, ab. Für andere Tiere und Menschen, selbst nahe Verwandte der Stechmücken sind diese Mittel nach heutigem Kenntnisstand ungefährlich. Die Wirksamkeit beruht dabei auf Proteinkristallen (Endotoxinen), welche die Bazillen am Ende ihrer Wachstumsperiode gleichzeitig mit der Sporenbildung erzeugen. Wenn diese Endotoxine von den Stechmückenlarven zusammen mit dem Futter aufgenommen werden, werden sie im Darm der Mücke zum Toxin aktiviert, lagern sich an die Mitteldarmzellen an, und bringen diese durch osmo-regulatorische Effekte zum Platzen. Die Mückenlarven sterben so innerhalb weniger Minuten bis Stunden ab.

Notwendige Voraussetzung der Wirksamkeit der Endotoxine sind
a) eine genügend hohe Konzentration, in der sie von den Stechmückenlarven aufgenommen werden;
b) die Aktivierung zum Toxin im alkalischen Darmmilieu der Mückenlarven durch entsprechende Proteasen, und
c) das Vorhandensein von entsprechenden Rezeptorstellen an den Darmzellen der Mücke, an die diese Toxine anbinden.

Daß diese Endotoxine so spezifisch wirken, scheint daran zu liegen, daß vor allem die Rezeptorstellen bei anderen Tieren nicht vorhanden sind bzw. der proteolytische Abbau in anderer Weise erfolgt.

Da diese mikrobiologischen Präparate als Fraßgifte nur gegen die Stech-, Zuck- und Kriebelmückenlarven eingesetzt werden können und andererseits als Proteine relativ rasch von den in der Natur vorkommenden verschiedensten Mikroorganismen abgebaut werden, ist es notwendig, die Präparate in geeigneter Konzentration in die Brutgewässer auszubringen, nachdem die Larven geschlüpft sind.

Bisher wird das Produkt dabei als Puderformulierung oder Flüssigkonzentrat mit entsprechenden Mengen Wasser gemischt und als Suspension über die befallenen Gewässer versprüht. Diese Zubereitungsformen haben den großen Nachteil, daß sie beim Verteilen aus der Luft sich auf den über die Gewässer ragenden Zweigen und Blättern niederschlagen und somit nicht an den Wirkort gelangen. In ungünstigen Gebieten, beispielsweise Auwäldern, kann so ein Verlust bis zu 80 % entstehen.

Weiterhin ist es bekannt, die Endotoxine mit Sand oder Maiskolbenbruch zusammen zu Granulaten zu verarbeiten, welche dann in fester Form verstreut werden können. Aus der DE-41 33 889-C2 sind ferner Zubereitungsformen, d.h. Tabletten bekannt, die in Gegenwart von Wasser Gas entwickeln, welches für die Ausbreitung des Wirkstoffs sorgt. Diese festen Zubereitungen rieseln beim Ausbringen aus der Luft zwar durch die Zweige hindurch und gelangen so an den Wirkort, sie sind aber verhältnismäßig teuer und verunreinigen durch die in großer Menge enthaltenen Hilfsstoffe die Gewässer.

Aus US-A-4 166 112 ist es bekannt Mikroorganismen oder Enzyme mit Eis zu Mischen, und dann in einem Polymer einzuschließen. Puderformulierungen wie vorliegend beschrieben wurden nicht erwähnt.

Es stellt sich daher die Aufgabe, eine Zubereitungsform zu finden, die es erlaubt die Präparate in fester Form auszubringen, ohne daß unerwünschte Hilfsstoffe ausgebracht werden.

Diese Aufgabe wird überraschenderweise durch die im Hauptanspruch kennzeichnenden Merkmale gelöst und durch die Merkmale gemäß den Unteransprüchen gefördert.

Es ist überraschend, daß Eisgranulate, die durch Einfrieren entsprechender wäßriger Endotoxin-Suspensionen, die ggf. noch in geringer Menge Hilfsstoffe enthalten, hergestellt werden, keine Schädigungen der enthaltenden Endotoxine verursachen, sondern im Gegenteil bei normaler Lagerung bei -10 bis -20 °C ein mikrobieller Abbau verlangsamt wird.

Die erfindungsgemäßen Eisgranulate sind in ihrer Zusammensetzung so eingestellt, daß sie etwas leichter sind als Wasser (D = 0,95 bis 0,98), wodurch sie beim Einbringen in das Gewässer an der Oberfläche schwimmen. Durch langsames Auftauen wird dann an der Oberfläche des Granulats das Endotoxin freigesetzt, welches langsam absinkt, wodurch die BTI-Kristalle gleichmäßig im ganzen Wasserkörper verteilt werden.

Für die Zusammensetzung der Eisgranulate ist ein hoher Anteil an BTI erwünscht, um möglichst geringes Gewicht im ausbringenden Flugzeug zu transportieren. Andererseits soll der Gehalt so niedrig sein, daß eine gleichmäßige Verteilung über die zu beaufschlagende Fläche gewährleistet ist.

Es hat sich bewährt, ca. 250 g (2,5 **·** 10⁹ ITU = International Toxic Units) Endotoxin auf 1 ha Gewässer auszubringen und dazu 5 - 50 I Wasser als Verdünnungsmittel zu verwenden, was zu einer 100 % Mortalität bei Stechmücken der Gattung Aedes und Culex führt.

Für die Herstellung der Eisgranulate werden vorzugsweise die handelsüblichen BTI- und Bacillus sphaericus-Flüssigkonzentrate homogen mit Wasser vermischt, so daß eine Endkonzentration von 1 - 200 g, vorzugsweise 5 - 100 g Endotoxin pro I Wasser entsteht. Bei Verwendung von festen Endotoxinpulvern ist ein Zusatz von Netzmitteln, Suspensionshilfen und/oder Verdickern sinnvoll, um eine gleichmäßige Vermischung zu gewährleisten. Das Granulat mit einem Körnungsdurchmesser von 2 - 20 mm, vorzugsweise 3 - 5 mm, wird entweder direkt aus der Mischung mit einer Eismaschine hergestellt, oder zunächst mit einer "Schneekanone" ein flockiges Eis erzeugt und in einer Pelletiermaschine zu Granulaten weiterverpreßt. Zermahlen größerer Eisblöcke und Absieben eines Feingranulats ist ebenfalls möglich, aber nicht bevorzugt, da die dabei entstehenden Körper eine unregelmäßige Form aufweisen und somit unter Druck leichter wieder zusammenwachsen. Handelsübliche Maschinen mit entsprechender Kühleinrichtung sind verwendbar. Das Eisgranulat wird in Thermo-Säcken verpackt und kann bei -20 °C im Kühlhaus gelagert werden. Entsprechend gekühlte Behälter in den Transportfahrzeugen und im ausbringenden Flugzeug erlauben auch hier längere Transportzeiten. Die Ausbringung selbst erfolgt über konventionelle Kreisel - oder Simplex-Streuer. Mit solchen Anlagen konnten Streubreiten von ca. 20 Metern erreicht werden.

Ein großer Vorteil des Eisgranulats liegt vor allem darin, daß keine Verluste von Wirkstoff (BTI und Bacillus sphaericus) zu verzeichnen sind. Bei der Applikation von BTI-Öl-Sand-Granulat gehen etwa 20 - 30 % des Wirkstoffes durch den Abrieb bei der Ausbringung verloren. Das BTI/ Bacillus sphaericus Puder-Öl-Gemisch löst sich von den Sandkörnern als Trägerstoffe ab, wenn es mit Druck aus den Streuanlagen katapultiert wird. Diesen Verlust hat man nicht beim Ausbringen des Eisgranulats, da der Wirkstoff im Granulat gebunden ist.

Ein weiterer Vorteil erwächst aus den physikalischen Eigenschaften von Eis. Mit einem spezifischen Gewicht von 0,96 g/cm³ ist Eis leichter als Wasser und schwimmt an der Wasseroberfläche. Beim Auflösen gibt das Granulat den Wirkstoff frei, der so ausreichend lange an der Wasseroberfläche verbleibt, in der Zone, in der die Stechmücken häufig ihre Nahrung aufnehmen. Dadurch reichen bereits geringere Mengen Toxin aus, um die Stechmückenlarven abzutöten.

Die Erfahrungen haben gezeigt, daß bei der Applikation von BTI-ÖI-Sand-Granulat etwa 25 kg Granulat pro Hektar ausgebracht werden müssen. Um eine ausreichende Wirkung zu erzielen, muß das Granulat etwa 900 g BTI-Puder mit einer Aktivität von etwa 10.000 ITU/mg enthalten. Bei Kosten von etwa 140,00 DM pro kg Konzentrat entstehen Materialkosten von mehr als 130,00 DM pro Hektar Brutareal. Ein Liter Flüssigkonzentrat kostet dagegen lediglich etwa 15,00 DM, so daß sich die Materialkosten auf nur 30,00 DM zusätzlich Produktions- und Lagerkosten belaufen. Insgesamt werden die Materialkosten pro Hektar bei der Verwendung der neuen Granulatformulierung etwa 60,00 DM und somit weniger als die Hälfte im Vergleich zu den Kosten bei herkömmlichen Granulaten betragen.

Eine weitere Ausführungsform der erfindungsgemäßen Eisgranulate eignet sich besonders zur gezielten Bekämpfung von am Gewässerboden lebenden Mückenlarven wie beispielsweise Zuckmückenlarven, die dem Tribus Chironomini angehören, z. B. Chironomus plumosus oder Chironomus thummi. Die Bekämpfung dieser nichtstechenden Mücken kann erforderlich werden, wenn ihre Population überhand nimmt. Beispielsweise ergeben sich bei Nahrungsmitteln durch die ungeheure Vielzahl der Tiere Gefahren in hygienischer Hinsicht. Die Schwärme können auch zu so starker Beeinträchtigung der Sicht führen, daß der Flugverkehr gefährdet ist. Außerdem können die Zuckmücken Allergien übertragen.

Während die Stechmückenlarven vorwiegend in den oberen Wasserschichten durch Filtrieren ihre Nahrung aufnehmen, besiedeln die Larven der Zuckmücken vorwiegend das Sediment von Dauergewässern, z. B. von Flüssen, Altwässern oder belasteten Klärteichen. Dort bauen die Larven im Sediment Gespinst- oder Gallertröhren. Die Gehäuse stellen meist beidseitig offene, in Schlamm oder Sand eingebettete Röhren dar. Der größte Teil der Zuckmückenlarven gehört den Detritus- und Mikroorganismenfressern an. Die Larven erzeugen in ihren Wohnröhren einen Wasserstrom und filtern auf diese Weise Sinkstoffe in Form absterbender oder abgestorbener Organismen aus dem Wasser. Teile des Gallerttrichters werden mit den eingestrudeiten Schwebteilchen von den Larven gefressen.

Die Endotoxine von BTI müssen also so verabreicht werden, daß sie zum einen auf den Gewässerboden sinken und zum anderen keine Wirkstoffe beim Absinken verloren gehen. Dies wird durch eine erfindungsgemäße Eisgranulafformulierung erreicht, die ein spezifisches Gewicht >1 aufweist, also schwerer als Wasser ist und zum Gewässergrund sinkt. Die für das Absinken notwendigen physikalischen Eigenschaften werden durch Zugabe von Ballaststoffen zum Granulat erreicht. Hierzu können mineralische Träger, wie Splitt oder Sand verwendet werden.

Es stellte sich als besonders vorteilhaft heraus, eine Schutzhülle in Form von Eis um das Granulatkorn zu legen. Hierdurch werden Wirkstoffverluste vermieden, da ein Ablösen des Wirkstoffs während des Absinkens verhindert wird. Ist das BTI-Eis-Mineralien-Granulat auf den Gewässerboden abgesunken löst sich die BTI-Eis-Hülle von dem mineralischen Träger ab und kann von den Larven mit der Nahrung aufgenommen werden.

Die Herstellung des BTI-Eis-Mineralien-Granulats kann beispielsweise in einem üblichen Zementmischer oder ähnlichen Vorrichtungen erfoigen. Geeignete Partikel des gewählten Trägermaterials, z. B. Splittpartikel, mit Korngrößen im Bereich von etwa 5 mm werden in den Mischer gegeben und mit flüssigern Stickstoff oder in anderer bekannter Weise auf ungefähr -10 °C abgekühlt. Danach besprüht man sie bei laufender Maschine gleichmäßig mit einer wäßrigen BTI-Suspension, wodurch sich ein BTI-Eismantel um den Träger bildet. Dies wird bis zum Erreichen der gewünschten Granulatgröße bzw. Werkstoffkonzentration wiederholt. Der

Werkstoffgehalt der BTI-Eishülle kann je nach Mückenart bzw. Larvenstadium variiert werden. Vorzugsweise legt man um die so erhaltenen biphasischen Granulatkörner noch eine Schutzschicht aus reinem Eis, indem man diese abschließend mit reinem Wasser besprüht. Die zugegebene Wassermenge richtet sich dabei nach Sinktiefe und Wassertemperatur. Weiterhin ist es möglich biologisch abbaubare Farbstoffe in die einzelnen Schichten einzubringen, um die Schichtdicken sichtbar zu machen und das Ablösen der Hüllen zu beobachten.

Eine bevorzugte Dosierung für das BTI-Eis-Mineralien-Granulat liegt im Bereich von etwa 70 kg/ha Wasserfläche, was ungefähr 15 I eines BTI-Konzentrats mit einer Aktivität von 1200 ITU/mg entspricht. Die Granulatkörner sinken innerhalb weniger Sekunden auf den Gewässergrund und geben dort ihren Wirkstoff ab. In Freilandversuchen an der Donau konnten Larvenpopulationen von Chironomus plumosus signifikant reduziert werden.

Das Granulat kann mit Streugeräten vom Boden oder besser noch mit dem Hubschrauber mit thermoisolierten Kreisel-Streuern ausgebracht werden.

Der Einsatz der neuen Granulatformulierungen empfiehlt sich insbesondere in großflächigen Brutarealen mit dichtem Pflanzenbewuchs.

### Beispiel 1

2 I BTI-Konzentrat (Vectobac 12 AS - Marke der Abbott Lab., USA) mit einer Aktivität von 1.2 · 10³ ITU/mg werden in 30 I Wasser suspendiert und zu etwa kugelförmigen Granulaten bzw. Pellets mit einem Durchmesser von 5 mm bzw. Volumen von 0,125 ml mittels einer Hageleismaschine verarbeitet. Die Menge wird mit einem Kreiselstreuer in einem Flugzeug über das Brutareal ausgebracht (ca. 1 ha), so daß ca. 2,4 **·** 10⁹ ITU/ha Endotoxin ausgebracht werden. Pro Quadratmeter Brutareal ergibt dies ca. 24 Körner, was für eine gleichmäßige Verteilung des Wirkstoffes ausreicht. Die applizierte Menge führt im Versuchsgebiet zu einer 100 % Mortalität der Stechmückenlarven der Gattungen Culex und Aedes.

### Beispiel 2

30 kg Splittpartikel mit einer Korngröße von etwa 5 mm werden in einen Zementmischer gegeben und mit flüssigem Stickstoff auf unter -10 °C gekühlt. Danach wird BTI-Konzentrat bei laufender Maschine gleichmäßig aufgesprüht. Dieser Vorgang wird mehrfach wiederholt, bis der um den mineralischen Nukleus gebildete Eismantel ausreichend groß ist. Insgesamt werden 15 I BTI-Konzentrat aufgebracht. Anschließend werden noch etwa 10 I Wasser als Schutzhülle auf das Granulat gesprüht. Mit einem Hubschrauber wird das Granulat in einer Dosierung von 70 kg/ha ausgebracht. Dabei wurden an der Donau Larvenpopulationen von Chironomus plumosus signifikant reduziert.

## Patentansprüche

1. Zubereitungsform von Bacillus thuringiensis israelensis- und/oder Bacillus sphaericus-Endotoxinen zur Bekämpfung von Stechmückenlarven, **dadurch gekennzeichnet, daß** es in Form von Eisgranulaten vorliegt und folgende Zusammensetzung hat:
| | |
|---|---|
| Bacillus thuringiensis israelensis- und/oder Bacillus sphaericus-Endotoxin | 1 - 200 g |
| Wasser und kühl gelagert ist. | 1 kg |

2. Zubereitung gemäß Anspruch 1, **gekennzeichnet durch** einen Gehalt von 10 bis 100 g/l Hilfsstoffen und/oder andere Wirkstoffe.

3. Zubereitungsform gemäß einem der Ansprüche 1 bis 2, **dadurch gekennzeichnet, daß** die Granulate einen Durchmesser von 2 - 20 mm, vorzugsweise 3 - 5 mm, und ein Gewicht von 0,01 - 1,0 g aufweisen.

4. Zubereitungsform gemäß Anspruch 1, **dadurch gekennzeichnet, daß** das Eisgranulat auf einen mineralischen Träger aufgebracht ist und ein spezifisches Gewicht >1 aufweist.

5. Zubereitungsform gemäß Anspruch 4, **dadurch gekennzeichnet, daß** als mineralischer Träger Splitt oder Sand verwendet wird.

6. Zubereitungsform gemäß Anspruch 4 oder 5, **dadurch gekennzeichnet, daß** um das biphasische Granulat eine Schutzhülle aus Eis aufgebracht wird.

7. Verwendung von Zubereitungen gemäß den Ansprüchen 1 bis 6 zur Bekämpfung von Stechmückenlarven, **dadurch gekennzeichnet, daß** diese dem mit den Larven befallenen Wasser in einer Menge von 0,1 - 100 ppm zugesetzt werden.

## Claims

1. Form of composition of Bacillus thuringiensis israelensis and/or Bacillus sphaericus endotoxins for the combatting of gnat larvae, **characterised in that** it is present in the form of ice granulates and has the following composition:
| | |
|---|---|
| Bacillus thuringiensis israelensis and/or Bacillus sphaericus endotoxin | 1 - 200 g |
| water | 1 kg |
and is cold stored.

2. Composition according to claim 1, **characterised by** a content of 10 to 100 g/l of adjuvants and/or other active materials.

3. Form of composition according to one of claims 1 to 2, **characterised in that** the granulates have a diameter of 2 - 20 mm, preferably of 3 - 5 mm, and a weight of 0.01 - 1.0 g.

4. Form of composition according to claim 1, **characterised in that** the ice granulate is applied to a mineral carrier and has a specific weight of > 1.

5. Form of composition according to claim 4, **characterised in that** grit or sand is used as mineral carrier.

6. Form of composition according to claim 4 or 5, **characterised in that** a protective envelope of ice is applied to the biphasic granulate.

7. Use of compositions according to claims 1 to 6 for the combatting of gnat larvae, **characterised in that** these are applied in an amount of 0.1 - 100 ppm to the water infested with the larvae.

## Revendications

1. Forme de préparation d'endotoxines de Bacillus thuringiensis israelensis et/ou de Bacillus sphaericus, pour la lutte contre les larves de moustiques, **caractérisée en ce qu'**ils se présentent sous la forme de granulés de glace et présentent la composition suivante:
| | |
|---|---|
| endotoxine de Bacillus thuringiensis israelensis et/ou de Bacillus sphaericus | 1 - 200 g |
| eau | 1 kg |
et en qu'il est conservé au froid.

2. Préparation selon la revendication 1, **caractérisée par** une teneur de 10 à 100 g/l de produits auxiliaires et/ou d'autres produits actifs.

3. Forme de préparation selon l'une des revendications 1 à 2, **caractérisée en ce que** les granulés présentent un diamètre de 2 à 20 mm, de préférence de 3 à 5 mm et un poids de 0,01 à 1,0 g.

4. Forme de préparation selon la revendication 1, **caractérisée en ce que** les granulés de glace sont appliqués sur un support minéral et présentent un poids spécifique > 1.

5. Forme de préparation selon la revendication 4, **caractérisée en ce que** l'on utilise comme support minéral du gravier ou du sable.

6. Forme de préparation selon la revendication 4 ou 5, **caractérisée en ce qu'**une coquille de protection en glace est appliquée autour du granulé biphasique.

7. Utilisation de préparations selon les revendications 1 à 6 pour la lutte contre les larves de moustiques, **caractérisée en ce que** ces préparations sont ajoutées à l'eau infestée de larves à une quantité de 0,1 à 100 ppm.
